(19) **Europäisches Patentamt**

**European Patent Office**

**Office européen des brevets**

(11) Numéro de publication : **0 342 078 B1**

(12) **FASCICULE DE BREVET EUROPEEN**

(45) Date de publication du fascicule du brevet :
04.03.92 Bulletin 92/10

(21) Numéro de dépôt : **89401116.2**

(22) Date de dépôt : **21.04.89**

㊿ Int. CI.$^5$ : **B60T 17/22**

(54) **Procédé de renouvellement du liquide de frein.**

(30) Priorité : **10.05.88 FR 8806266**

(43) Date de publication de la demande :
**15.11.89 Bulletin 89/46**

(45) Mention de la délivrance du brevet :
**04.03.92 Bulletin 92/10**

(84) Etats contractants désignés :
**AT BE CH DE ES FR GB GR IT LI LU NL SE**

(56) Documents cités :
**EP-A- 0 107 954**
**FR-A- 2 585 650**
**GB-A- 1 463 502**
**US-A- 3 039 501**
**US-A- 4 082 163**
**US-A- 4 201 056**

(73) Titulaire : **BENDIX EUROPE Services
Techniques S.A.
126 rue de Stalingrad
F-93700 Drancy (FR)**

(72) Inventeur : **Bernard, Philippe
Bendix France S.A. 126 Rue de Stalingrad
F-93700 Drancy (FR)**
Inventeur : **Guineau, Jaques
Bendix France S.A. 126 Rue de Stalingrad
F-93700 Drancy (FR)**
Inventeur : **Gorse, Jean
Bendix France S.A 126 Rue de Stalingrad
F-93700 Drancy (FR)**

Jouve, 18, rue Saint-Denis, 75001 PARIS

## Description

La présente invention concerne les véhicules automobiles et, plus particulièrement, le renouvellement du liquide de frein du circuit hydraulique statique de freinage de tels véhicules.

On sait que le liquide de frein doit régulièrement être changé en tout ou partie dans un véhicule automobile. En effet, d'une part, ce liquide perd ses qualités en vieillissant et, d'autre part, le circuit hydraulique doit souvent être purgé lors d'intervention sur les freins eux-mêmes. On sait également qu'aucune trace d'air ne doit être emprisonnée dans la partie du circuit pouvant être mise sous pression. Il en résulte des difficultés évidentes pour renouveler le liquide.

Or ces difficultés ne peuvent généralement pas être surmontées par les particuliers voulant entretenir eux-mêmes leurs véhicules, et les garagistes, pour les surmonter, doivent mettre en oeuvre des équipements complexes faisant généralement appel à une poche d'air comprimé pour introduire le liquide de frein.

Une solution à ce problème est décrite dans FR-A-2 585 650. Toutefois, cette solution met en oeuvre une station d'intervention présentant l'inconvénient d'être ré-utilisable et ne donnant donc pas les garanties requises par la sécurité en matière de liquide de frein.

La présente invention a pour but d'obvier à ces inconvénients grâce à un procédé pouvant être mis en oeuvre par un particulier et impliquant l'utilisation de liquide de frein neuf.

L'invention concerne donc un procédé de renouvellement du liquide de frein dans un circuit hydraulique statique comprenant en série un réservoir du dit liquide, un maître-cylindre et un moteur de frein auquel est associé une vis de purge, au moyen d'un bidon de liquide et d'un adaptateur susceptible de remplacer de façon étanche le bouchon du réservoir. Il comprend les étapes suivantes :
- on remplace le bouchon du réservoir par un adaptateur,
- on desserre légèrement la vis de purge,
- on dispose le bidon dans l'adaptateur,
- on applique une pression sur le liquide dans au moins une partie d circuit hydraulique ainsi constitué de manière à déterminer l'expulsion du liquide usagé et son remplacement par le liquide en provenance du bidon.

Selon l'invention, l'adaptateur comprend deux douilles prévues pour coopérer de façon étanche respectivement avec le col bidon et avec le col du réservoir, les deux douilles étant reliées entre elles par un conduit dont une extrémité se prolonge à l'intérieur du réservoir au moins jusqu'au niveau minimal du liquide dans ce dernier, la douille coopérant avec le col du bidon comportant un couteau venant perforer un bouchon en matière perforable du bidon lors de la mise à pression atmosphérique du fond du bidon, et on fixe à la vis de purge une valve anti-retour permettant l'expulsion du liquide usagé et interdisant toute aspiration d'air.

Selon un mode avantageux de réalisation de cet adaptateur, une pompe est disposée dans le conduit précité.

L'invention concerne également un bidon pour la mise en oeuvre du procédé précité. Selon l'invention, il comporte un bouchon en matière perforable au moyen d'un couteau, et son fond comporte un opercule par exemple détachable manuellement ou perforable au moyen d'un poinçon.

De préférence, ce bidon comporte au moins une fenêtre pourvue d'une échelle graduée permettant de vérifier le niveau du liquide dans le bidon et de répartir le liquide entre tous les moteurs de frein du véhicule.

L'invention sera mieux comprise, et d'autres buts, avantages et caractéristiques de celle-ci apparaîtront plus clairement à la lecture de la description qui suit de modes de réalisation donnés à titre non limitatif et à laquelle est jointe une planche de dessins sur laquelle :
- la figure 1 représente schématiquement en coupe un bidon disposé dans l'adaptateur remplaçant le bouchon du réservoir conformément à la présente invention, et
- les figures 2 et 3 illustrent deux modes de réalisation d'un adaptateur conforme à l'invention et pourvu d'une pompe.

En référence maintenant aux figures, on a représenté le bidon 1 disposé dans la douille 2 de l'adaptateur 10. L'autre douille 3 de ce dernier est disposée à la place du bouchon sur le réservoir 4 de liquide de frein. Les douilles 2 et 3 comportent un moyen d'étanchéité pouvant être constitué par une rondelle de caoutchouc 5,6. Les deux douilles sont, par exemple, taraudées de manière à coopérer avec le filetage correspondant du col du bidon 1 et du col du réservoir 4.

Les deux douilles 2 et 3 sont reliées entre elles par un conduit 7 dont une partie 8 se prolonge à l'intérieur du réservoir 4 au moins jusqu'au niveau minimal de ce dernier. Ce prolongement 8 permet de canaliser le liquide lors de sa descente du bidon vers le réservoir et de réduire l'émulsion d'air dans le liquide.

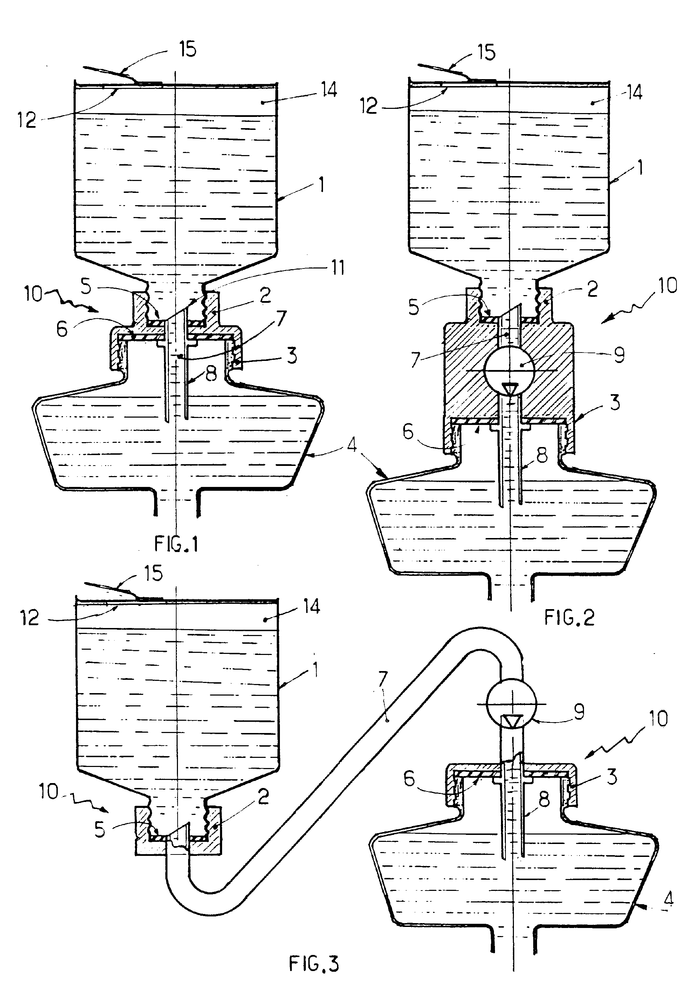

Comme on peut le constater figures 2 et 3, une pompe 9 est avantageusement disposée dans le conduit 7 de manière à déterminer une pression supérieure à la pression atmosphérique appliquée au liquide dans le réservoir 4. D'une manière générale, l'adaptateur 10 peut présenter une forme intégrale (Figure 2) ou une forme adaptative (figure 3), le conduit 7 étant alors souple. Dans ce dernier cas, la douille 2 et la pompe 9 peuvent avantageusement être disposées dans une mallette appropriée, pourvue par exemple des connecteurs électriques requis pour le fonctionnement de la pompe si cette dernière comporte un moteur d'entraînement électrique ; le conduit souple 7 fait alors saillie de la mallette et présente une longueur suffisante pour permettre la mise en place de la douille 3 sur le col du réservoir 4.

Pour mettre en oeuvre le procédé précité, le fond du bidon 1 de liquide à l'état neuf doit pouvoir être mis à la pression atmosphérique. Pour ce faire, on prévoit sur ce fond un opercule ou partie pré-découpée 12 permettant la mise à l'air libre de la chambre 14, par exemple au moyen d'un poinçon ou bien au moyen, comme représenté sur les figures, d'une languette 15 que l'utilisateur soulève pour arracher la partie prédécoupée du fond du bidon 1.

De préférence, la douille 2 est pourvue d'un couteau 11 venant perforer le bouchon du bidon lors de sa mise en place sur cette douille, l'utilisateur n'ayant plus alors qu'à ouvrir l'opercule 12 pour mettre le fond du bidon à l'air libre.

Comme indiqué ci-avant, l'utilisateur devra avoir, au préalable, dévissé légèrement la vis de purge du moteur de frein et y avoir fixé une valve anti-retour. De préférence, pour des raisons pratiques évidentes, cette valve anti-retour sera disposée à l'extrémité d'un conduit venant s'emboîter sur la vis de purge, de manière à ce que le liquide usagé expulsé par ce chemin puisse être recueilli dans un récipient quelconque.

Pour favoriser l'opération de renouvellement du liquide de frein dans chacune des roues, on pourra prévoir l'utilisation d'un bidon de liquide comportant une fenêtre pourvue d'une échelle graduée permettant de vérifier le niveau du liquide dans le bidon. Dès que le liquide aura atteint une graduation, l'utilisateur devra revisser la vis de purge et disposer la valve anti-retour à la vise de purge d'un autre frein, après avoir légèrement dévissé cette dernière l'opération se déroulant successivement pour les quatre roues.

Bien évidemment, l'Homme de l'Art pourra apporter de nombreuses modifications et variantes à la présente invention sans sortir de son cadre qui est défini par les revendications ci-après.

## Revendications

1. Procédé de renouvellement du liquide de frein dans un circuit hydraulique statique comprenant en série un réservoir du dit liquide, un maître-cylindre et un moteur de frein auquel est associée une vis de purge au moyen d'un bidon de liquide neuf et d'un adaptateur susceptible de remplacer de façon étanche le bouchon du dit réservoir, le dit procédé comprenant les étapes suivantes :
   – on remplace le bouchon du dit réservoir (4) par un adaptateur (10),
   – on desserre légèrement la vis de purge,
   – on dispose le bidon (1) dans le dit adaptateur (10),
   – on ouvre à la pression atmosphérique le fond (12) du dit bidon, et
   – on applique une pression sur le dit liquide dans au moins une partie du circuit hydraulique ainsi constitué de manière à déterminer l'expulsion du liquide usagé et son remplacement par le liquide en provenance du dit bidon (1),
   le dit procédé étant caractérisé en ce que le dit adaptateur (10) comprend deux douilles (2, 3) prévues pour coopérer de façon étanche respectivement avec le col du dit bidon (1) et avec le col du dit réservoir (4), les deux douilles (2, 3) étant reliées entre elles par un conduit (7) dont une extrémité (8) se prolonge à l'intérieur du dit réservoir au moins jusqu'au niveau minimal du liquide dans ce dernier, la douille (2) coopérant avec le col du dit bidon (1) comportant un couteau (11) venant perforer un bouchon en matière perforable du dit bidon (1) lors de la mise en place de ce dernier dans la douille correspondante (2), que le dit bidon comporte un opercule (12) permettant la mise à pression atmosphérique du fond du dit bidon, et que l'on fixe à la dite vis de purge une valve anti-retour permettant l'expulsion du liquide usagé et interdisant toute aspiration d'air.

2. Procédé selon la revendication 1, caractérisé en ce que la dite pression est appliquée successivement en actionnant plusieurs fois la pédale associée au maître-cylindre.

3. Procédé selon la revendication 1, caractérisé en ce que la dite pression est appliquée au moyen d'une pompe (9) disposée dans le dit adaptateur (10).

## Patentansprüche

1. Verfahren zur Erneuerung der Bremsflüssigkeit in einem statischen Hydraulikkreis, der in einer Reihenschaltung einen Behälter für die Flüssigkeit, einen Hauptzylinder und einen Bremsmotor, dem eine Entleerungsschraube zugeordnet ist, aufweist, mittels eines neue Flüssigkeit enthaltenden Gefäßes und eines Adapters, der dazu geeignet ist, auf dichte Weise gegen den Verschluß des Behälters ausgetauscht zu werden, wobei das Verfahren die folgenden Schritte umfaßt:
   – Austauschen des Verschlußes des Behälters (4) durch einen Adapter (10),
   – leichtes Lösen der Entleerungsschraube,
   – Anbringen des Gefäßes (1) im Adapter (10),
   – Öffnen des Bodens (12) des Gefäßes gegenüber dem Atmosphärendruck, und
   – Anlegen eines Druckes auf die Flüssigkeit wenigstens in einem Teil des somit gebildeten Hydraulikkreises, derart, daß damit die Austreibung der benutzten Flüssigkeit und deren Austausch durch die vom Gefäß (1) kommende Flüssigkeit bestimmt wird,

wobei das Verfahren dadurch gekennzeichnet ist, daß der Adapter (10) zwei Buchsen (2, 3) aufweist, die dazu vorgesehen sind, auf dichte Weise mit dem Hals des Gefäßes (1) bzw. mit dem Hals des Behälters (4) zusammenzuwirken, wobei die,zwei Buchsen (2, 3) miteinander über eine Leitung (7) verbunden sind, von der sich ein Ende (8) in das Innere des Behälters wenigstens bis zum minimalen Flüssigkeitspegel in diesem letzteren erstreckt, und wobei die Buchse (2), die mit dem Hals des Gefäßes (1) zusammenwirkt, eine Schneide (11) aufweist, die einen Stopfen aus durchstoßbarem Material des Gefäßes (1) durchstößt, wenn das Gefäß in die entsprechende Buchse (2) eingesetzt wird, daß das Gefäß einen Deckel (12) aufweist, mit dem der Boden des Gefäßes dem Atmosphärendruck ausgesetzt werden kann, und daß an der Entleerungsschraube ein Rückschlagventil befestigt wird, das das Austreiben der benutzten Flüssigkeit gestattet und jegliches Ansaugen von Luft verhindert.

2. Verfahren gemäß Anspruch 1, dadurch gekennzeichnet, daß der Druck aufeinanderfolgend angelegt wird, indem das mit dem Hauptzylinder verbundene Pedal mehrere Male betätigt wird.

3. Verfahren gemäß Anspruch 1, dadurch gekennzeichnet, daß der Druck mittels einer im Adapter (10) angeordneten Pumpe (9) angelegt wird.

## Claims

1. Process for changing the brake fluid in a static hydraulic circuit comprising, in series, a tank of the said fluid, a master cylinder and a brake motor with which a vent screw is associated by means of a can of new fluid and an adapter capable of replacing the plug of the said tank leaktightly, the said process involving the following steps:
– the plug of the said tank (4) is replaced by an adapter (10),
– the vent screw is loosened slightly,
– the can (1) is arranged in the said adapter (10),
– the bottom (12) of the said can is opened at atmospheric pressure, and
– a pressure is exerted on the said fluid in at least part of the hydraulic circuit thus formed, so as to determine the expulsion of the used fluid and its replacement by the fluid coming from the said can (1),
the said process being characterized in that the said adapter (10) comprises two bushes (2, 3) intended to interact sealingly respectively with the neck of the said can (1) and with the neck of the said tank (4), the two bushes (2, 3) being connected to one another by means of a conduit (7) one end (8) of which is extended on the inside of the said tank at least to the minimum level of the fluid in the latter, the bush (2) interacting with the neck of the said can (1) having a knife (11) which pierces a plug made of a pierceable material of the said can (1) when the latter is installed in the corresponding bush (2), in that the said can possesses a seal (12) allowing the bottom of the said can to be brought to atmospheric pressure, and in that a non-return valve making it possible to expel the used fluid and preventing any air suction is fastened to the said vent screw.

2. Process according to Claim 1, characterized in that the said pressure is exerted successively by actuating the pedal associated with the master cylinder several times.

3. Process according to Claim 1, characterized in that the said pressure is exerted by means of a pump (9) arranged in the said adapter (10).

FIG.1

FIG.2

FIG.3